# EUROPEAN PATENT APPLICATION

(11) **EP 0 683 590 A1**
(43) Date of publication of application: **22.11.1995**
(21) Application number: 95302531.9
(22) Date of filing: 18.04.1995
(51) Int. Cl.: H04M 9/02, H04M 3/58, H04Q 3/62

(54) **Telephone exchange system**

(30) Priority: 19.04.1994 GB 9407696
(71) Applicant: MARIKON RESOURCES, INC, Arcadia, CA 91006 (US)
(72) Inventor: Chu, Winston Tak Yin, Kwun Tong, Kowloon, (HK)
(74) Representative: Findlay, Alice Rosemary

(57) **Abstract**

A telephone system accessory for converting a telephone system (2) comprising an outside line (6), an internal line (8) and a plurality of telephone port (12) to a telephone exchange system; the accessory comprising a main exchange unit (14) and a plurality of subsidiary exchange units (20); a telephone exchange system utilising the telephone system accessory; and a method of modifying an existing telephone system by inserting the telephone system accessory.

## Description

This invention relates to a telephone exchange system.

In particular, this invention relates to a telephone exchange system connectable to an existing telephone system, and a method of modifying an existing telephone system to include a telephone exchange system.

Existing telephone exchange systems are generally expensive and difficult to install. They also often require complete rewiring of the telephone system.

The object of this invention is to overcome the above difficulties or disadvantageous or to at least to provide the public with a useful choice.

In accordance with the invention, a telephone system accessory is provided for converting a telephone system to a telephone exchange system, the telephone system comprising an outside line, an internal line, a plurality of telephone ports and a plurality of telephone units, each with ringing means, the accessory comprising a main exchange unit, a plurality of subsidiary exchange units, and means to activate when a call is received the ringing means of the telephone units.

In such an arrangement, the accessory can be used with ordinary and cordless telephone units.

Suitably, the main exchange unit is connectable between the outside line and the internal line, and the subsidiary exchange unit is also connectable to the telephone ports.

Advantageously, the telephone units are also connectable to the subsidiary exchange units.

Preferably, the main exchange unit comprises monitoring means to monitor the status of the outside line, sensing means to sense the status of each telephone port, decoding means to decode incoming signals, controlling means to alert the user to a telepone port status, and sound generating means.

Advantageously, the main exchange unit further comprises a protection circuit.

Preferably, the main exchange unit further comprises a holding means to place an incoming call on hold.

Suitably, the subsidiary exchange unit comprises monitoring means to monitor the status of an internal line, sensing means to sense the status of the telephone port, decoding means to decode incoming signals, and a controlling means to alert the user to its telephone port status.

Advantageously, the monitoring means is a current sensor.

Preferably, the decoding means comprises a tone receiver decoder, and a multi-plexer.

Suitably, the controlling means is a logic controller.

Advantageously, the telephone system accessory is connected to an existing telephone system.

Preferably, a telephone exchange system includes the telephone system accessory connected to a telephone system.

The invention will now be described with reference to the accompanying drawings in which :
Figure 1 is a schematic drawing of a standard household telephone system having three telephone ports;
Figure 2 is a schematic drawing of the telephone system of figure 1 modified according to the present invention;
Figure 3 is a flow diagram of the sequence of events when the exchange system of the present invention is installed in a three telephone system, and a call on an outside line is transferred from one telephone to another;
Figure 4 is a flow diagram showing the sequence of events when the exchange system of the present invention is connected to a three telephone system and the internal communication system is utilized;
Figure 5 is a schematic flow diagram of how a preferred main exchange unit works; and
Figure 6 is a schematic flow diagram of how preferred subsidiary exchange units work.

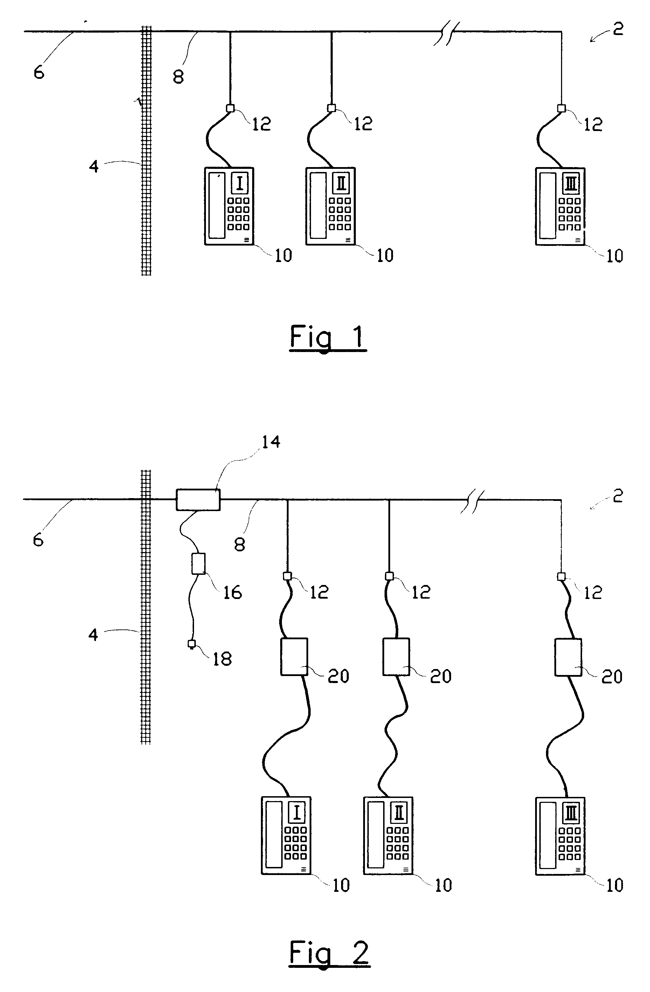

Figures 1 and 2 show how an existing telephone system may be modified according to the invention.

Figure 1 shows a standard domestic telephone system generally shown at 2. The system comprises an outside line 6 passing through a wall of a building, and becoming an internal line 8 which is then connected to the three telephones 10 via ports 12. The telephones 10 are, as is conventional, arranged in parallel.

In figure 2 the telephone system of figure 1 has been modified by inserting a main exchange unit 14 between the outside line 6 and the inside line 8 which is provided with an adaptor 16 and plug 18. The installation of such a unit merely requires the connection of the unit 14 to the outside line, and does not require rewiring or, special training to install.

The system is provided with a subsidiary exchange unit 20 between each port 12 and each telephone 10 which again is merely connected to the existing line. The units 20 may be made ever easier to install by attaching at one end a standard plug which can communicate with a standard telephone port plug receiving member, and on the other end a plug receiving member which can receive a plug attached to the telephone.

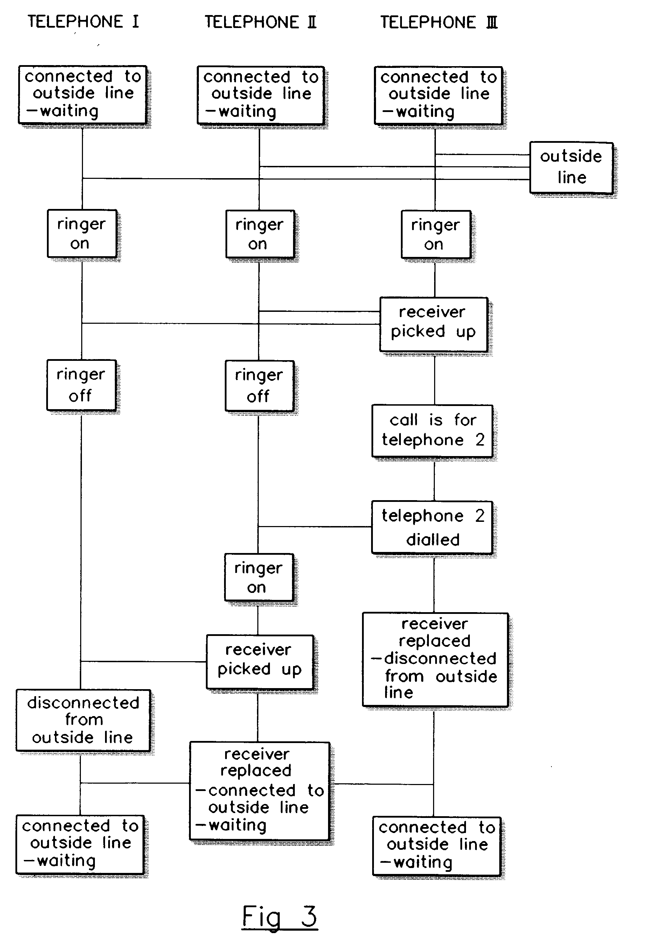

With the exchange system of figure 2 in place, an outside call received by telephone III may be transferred to telephone II as shown in the flow diagram in figure 3. Referring to figure 3, all of the telephones 10 are connected to the outside line, and are awaiting a call. When a call comes in from the outside line each of the telephones 10 ring. In particular, each of the telephones 10 is provided with a ringing means on the telephone unit itself, and in particular, on the handset of the telephone unit.

Such is necessary in order that the telephone system accessory can work with ordinary telephone units and cordless telephone units.

Referring back to Figure 3, when the receiver of telephone III, is picked up the ringers switch off. It is then found that the call on the outside line is for telephone II. The person at telephone III then dials the code for telephone II. The main exchange unit 14 then sends a ringer signal to the internal phone line. As the ringer signal is coded for phone II, the subsidiary exchange units connected to phones I and III do not recognise the ringer signal, and therefore do not connect those phones to the internal telephone line. The subsidiary exchange unit of telephone II, however, recognises the ringer signal, connects telephone II to the internal phone line which is connected to the outside line by the main exchange unit, and activates telephone II's ringer. When the receiver is replaced on telephone III, that telephone is disconnected from the outside line. When the receiver is picked up on telephone II the ringer switches off and telephone I is also disconnected from the outside line. When the receiver is replaced on telephone II, it is reconnected to the outside line and stands waiting for another incoming call. The replacing of the receiver on telephone II also reconnects telephones I and III to the outside line which also stand waiting for another incoming call.

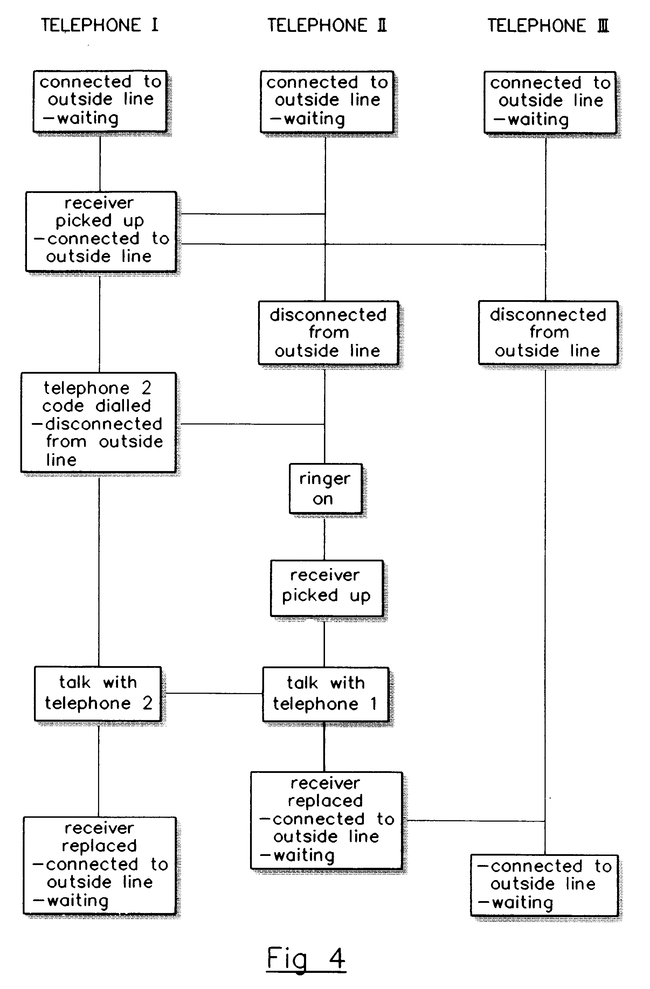

The exchange system of the present invention may also work as an internal communication system as shown in the flow diagram of figure 4. In figure 4 the person at telephone I wishes to speak to the person at telephone II. All the telephones are connected to the outside line and awaiting an incoming call. When the receiver of telephone I is picked up, telephone I is connected to the outside line by the main exchange unit 14, and telephones II and III disconnect the outside line. When the code for telephone II is dialled, telephone I also disconnects the outside line and a ringer signal is sent to telephones II and III. As the code for telephone II has been used, only telephone II will recognise the ringer signal and will ring. When telephone II's receiver is picked up, the person at telephone II can talk with the person on telephone I. When the receivers of telephones I and II are returned to their cradles, all three telephones are reconnected to the outside line, and stand waiting for an incoming call.

The internal workings of units 14 and 20 are all conventional and may be arranged in any suitable fashion as would be obvious to one skilled in the art to which this invention relates.

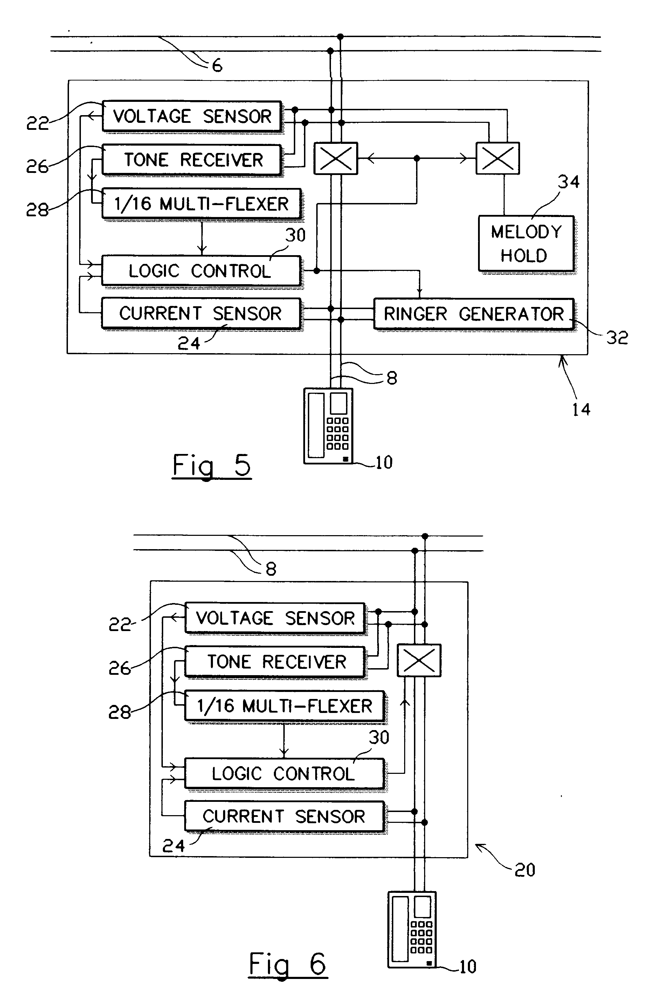

As can be seen in figure 5, a preferred main exchange unit comprises a monitoring means to monitor the status of the outside line, such as voltage sensor 22; a sensing means to sense the status of each telephone port such as current sensor 24; a decoding means to decode an incoming signal such as tone receiver 26 and multi-plexer 28; a controlling means to alert a user to a telephone port status, such as logic controller 30, and a sound generating means such as ringer generator 32. The main exchange unit may also comprise a holding means which may or may not incorporate a melody function as shown at 34.

A preferred subsidiary exchange unit is shown in figure 6 and comprises a monitoring means to monitor the status of the internal line, for example, voltage sensor 22; a sensing means to sense the status of its telephone port, such as current sensor 24; a decoding means to decode incoming signals such as tone receiver 26 and multi-plexer 28; and a controlling means to alert a user to a telephone port status, such as logic control 30.

Thus when a call is received by the telephone system the main exchange unit and subsidiary exchange units preferably work as follows:-
A call comes in on an outside line and all three telephones ring.

When the receiver of one of the telephone is picked up all telephones cease ringing. As in the scenario shown in figure 3, for example, telephone III is picked up and it is found that the call is for the person at telephone II. The person at telephone III then dials the code for telephone II, which preferably comprises at least two digits. When the main exchange unit receives the first digit it puts the outside line on hold. When it receives the second digit the decoding means, that is the tone receiver 26 and multi-plexer 28 recognise the second digit as an instruction to activate the controlling means, ie. the logic control 30, to send a ringer signal to each of the subsidiary exchange units. The tone receiver 26, multi-plexer 28 of each of the subsidiary exchange units receive the ringer signal and the code for telephone II. The units of telephones I and III will not recognize the signal and will remain silent. The unit of telephone II, recognizes the signal and directs the logic controller 30 to activate a ringer. When the receiver of telephone II is picked up the sensing means, that is current sensor 24, senses this and activates the logic control 30 to cease the ringing signal. Telephone II is now connected through the internal telephone system to the outside line.

When the internal communication function is utilized, the current sensor 24 in the subsidiary exchange unit 20 attached to each telephone senses the picking up of the receiver and tells the logic control 30 that the receiver has been picked up. The logic controller 30 will connect the telephone to the external line and the dial tone will be heard. The current sensor 24 in the main exchange unit also senses that the receiver has been picked up and connects the external line to the internal line. The current sensor 24 in the main exchange unit 14 also senses that the other phones have their receivers in place in their cradles and therefore disconnects those two telephones from the external line.

The telephone in use is used to dial the code for another telephone. When this code is received by the main exchange unit, the outside line will be disconnected from the internal line and the dial tone will no longer be heard. The ringer generator 32 will then be activated and a ringing signal will be sent to the telephone which matches the code dialled. The subsidiary exchange unit corresponding to the telephone dialled receives the code and through the tone receiver 26 and multi-plexer 28 and recognizes the code as its own, connects the telephone to the internal telephone line and directs the logic controller to turn the ringer on. As the code is not recognized by any other subsidiary exchange units, no other telephones ring. When the telephone dialled has its receiver picked up, the telephone dialled and the dialling telephone are connected and the persons using those telephones may talk with each other. Preferably a busy indicator will be activated in all phones not party to the conversation.

The telephone exchange system of the invention is particularly suitable for connection to existing telephone systems as it can use a standard two wire line existing in most domestic telephone lines by virtue of the separation of the exchange and subsidiary units. Of course, the exchange system may also be used as part of a new installation.

The system may be used with any number of telephones but a maximum of around nine telephones is practical. Thus the present invention is a significant advance, particularly when attached to a domestic telephone system. In a domestic telephone system, when a call is received and it is found that the call is for a person situated at or near another telephone, it is necessary to notify that person by shouting out, using a separate internal communication system, or running to find the person.

Further, when the required person has been located, the person who first received the call must return to their telephone and replace the receiver. As the telephones are all connected to each other, this person may also listen to the conservation being had with the outside line.

With the exchange system of the present invention installed, the person initially receiving the call need only transfer the call to the telephone nearest the required person. The required person can also feel more comfortable as he/she is assured that no-one can listen into his/her conservation.

Suitably, each telephone 10 is a pulse and/or tone telephone unit.

The above describes preferred embodiments of the invention, variations and modifications in which may be made without departing from the scope of the invention has claimed in the following claims.

## Claims

1. A telephone system accessory for converting a telephone system to a telephone exchange system, the telephone system comprising an outside line, an internal line, a plurality of telephone ports and a plurality of telephone units each with ringing means, the accessory comprising a main exchange unit, a plurality of subsidiary exchange units, and means to activate when a call is received the ringing means of the telephone units.

2. A telephone system accessory as claimed in claim 1, wherein the main exchange unit is connectable between the outside line and the internal line; and the subsidiary exchange units are connectable to the telephone ports.

3. A telephone system accessory as claimed in either claim 1 or claim 2, wherein the telephone units are connectable to the subsidiary exchange units.

4. A telephone system accessory as claimed in any preceding claim, wherein the main exchange unit comprises a monitoring means to monitor the status of the outside line; a sensing means to sense the status of each telephone port; a decoding means to decode incoming signals; a controlling means to alert the user to a telephone port status; and sound generating means.

5. A telephone system accessory as claimed in claim 4, wherein the main exchange unit further comprises a protection circuit.

6. A telephone system accessory as claimed in any preceding claim, wherein the main exchange unit further comprises a holding means to place an incoming call on hold.

7. A telephone system accessory as claimed in any preceding claim, wherein the subsidiary exchange unit comprises a monitoring means to monitor the status of an internal line; a sensing means to sense the status of its telephone port; a decoding means to decode incoming signals; and a controlling means to alert the user to its telephone port status.

8. A telephone system accessory as claimed in any one of claims 4 to 7, wherein the monitoring means is a current sensor.

9. A telephone system accessory as claimed in any one of claims 4 to 8, wherein the decoding means comprises a tone receiver decoder and a multi-plexer.

10. A telephone system accessory as claimed in any one of claims 4 to 9, wherein the controlling means is a logic controller.

11. A telephone system accessory as claimed in any preceding claim wherein the telephone units are telephones with cordless handsets.

12. A telephone system accessory as claimed in any preceding claim, wherein the telephone system accessory is connected to an existing telephone system.

13. A telephone exchange system comprising a telephone system accessory as claimed in any preceding claim connected to a telephone system.
